# EUROPEAN PATENT SPECIFICATION

(11) **EP 2 358 935 B1**
(45) Date of publication and mention of the grant of the patent: **28.08.2013**
(21) Application number: 09768594.5
(22) Date of filing: 14.12.2009
(51) Int. Cl.: B32B 27/32, B32B 27/36, D04H 3/16, D04H 3/14, D04H 3/147, B32B 27/12

(54) **NON-WOVEN SHEET CONTAINING FIBERS WITH SHEATH/CORE CONSTRUCTION**
VLIESSTOFF MIT KERN-MANTEL-FASERN
FEUILLLE NON-TISSEE CONTENANT DES FIBRES DE TYPE ÂME/GAINE

(30) Priority: 15.12.2008 US 334904
(43) Date of publication of application: 24.08.2011
(73) Proprietor: E. I. du Pont de Nemours and Company, Wilmington, DE 19898 (US)
(72) Inventor: LAURA, David, Matthews, Jr., Midlothian Virginia 23112 (US); MA, Xun, Midlothian Virginia 23112 (US); ROLLIN, Paul, Ellis, Jr., Kingwood, TX 77345 (US)
(74) Representative: Dannenberger, Oliver Andre
(86) International application number: PCT/US2009/067833
(87) International publication number: WO 2010/075024

(56) References cited:
- WO-A1-2005/056895
- WO-A1-2005/059219
- WO-A2-2007/016480
- JP-A- 3 137 259
- US-A1- 2005 269 011

## Description

### BACKGROUND OF INVENTION

### 1. Field of the Invention.

The present invention is directed to a non-woven sheet having improved voltage endurance characteristics due to the selection of specific fibers.

### 2. Description of Related Art.

U.S. Patent Application Publication No. 2005/0269011 A1 discloses a method for making a spunbonded fabric from a blend of polyarylene sulfide and a crystal enhancer. U.S. Patent No. 6,949,288 discloses a multicomponent fiber with a polyarylene sulfide component and incorporation of the fibers into various products.

WO 2007/016480 discloses bicomponent fibers having a polyethylene sheath and a higher melting core polymer for making a nonwoven liquid barrier sheet material.

There is a need for a non-woven sheet having superior properties to known fabrics.

### SUMMARY OF INVENTION

The present invention is directed to a non-woven sheet comprising a network of substantially-continuous thermoplastic polymer filaments, the polymer filaments each individually comprising a plurality of polymers including at least a first polymer and a second polymer, the melting point of the first polymer being at least 15 degrees C higher than the melting point of the second polymer, the individual polymer filaments further characterized in that
(1) the first polymer comprises from 10 to 70 weight percent of the total weight of the first and second polymer,
(2) the second polymer comprises from 30 to 90 weight percent of the total weight of the first and second polymer and,
the network of filaments being consolidated and fused such that
(a) the first polymer forms a continuous phase in the fused consolidated network and
(b) the second polymer forms a disperse phase in the fused consolidated network.

The non-woven sheet particularly in combination with a further dielectric sheet is useful as an insulating material.

### BRIEF DESCRIPTION OF FIGURES

Figure 1 depicts a typical process for making fiber and forming the fibers into a non-woven web or sheet.
Figure 2 shows the additional calendering process utilized in this invention.
Figure 3 shows an alternative calendering process used in this invention.
Figure 4 is an outline of the process used to make an electrical insulation laminate.

### DETAILED DESCRIPTION OF THE INVENTION

### Definitions:

By multicomponent fibers it is meant the fiber is comprised of more than one polymer. In one preferred embodiment the fiber is bicomponent, meaning it is melt spun with two thermoplastic polymers in a sheath-core arrangement.

The phrase "more than one polymer" is meant to include not only polymers having different chemical structures, but polymers having similar structures but having different melting points.

By nonwoven it is meant an assembly of textile fibers in a random web or mat held together by mechanical interlocking, by fusing of the fibers or by bonding with a cementing medium.

### Discussion:

A preferred final article of the present invention is a non-woven sheet in combination with a dielectric film with the article suitable for use in electrical insulation. The non-woven sheet has superior mechanical strength, initial tear resistance and elongation. The non-woven sheet also provides enhanced voltage endurance to the electrical insulation component.

The non-woven sheet is made from multicomponent sheath/core polymeric fibers having an average diameter greater than 7 microns. A preferred range of average fiber diameter is in a range from 14 to 21 microns.

For purposes of illustration, the multicomponent sheath/core polymeric fibers can be round, trilobal, pentalobal, octalobal, like a Christmas tree, dumbbell-shaped, island-in-the-sea or otherwise star shaped in cross section. The fibers may also be in a side by side arrangement. The polymer component of the sheath is referred to as the first polymer and the polymer component of the core is referred to as the second polymer

The core component contains a second polymer present in a range from 30 to 90 weight percent based on the total weight of polymer in the core and sheath. Accordingly, the sheath component contains a first polymer in a range from 10 to 70 weight percent. A preferred range for the second polymer is in a range from 30 to 50 weight percent and accordingly a preferred range for the first polymer is in a range from 50 to 70 weight percent.

A further requirement in the sheath/core construction of the fibers is the melting point of the first polymer (the sheath) which is at least 15 degrees centigrade higher than the melting point of the second polymer (the core). Typically, the difference in melting points is at least 20 degrees centigrade. Accordingly, the sheath has a higher thermal stability than the core.

One preferred embodiment of the present invention is directed to a non-woven sheet made from sheath/core fibers wherein the core is formed from polymers such as polyolefin, polyester or polyamide (the second polymer) and the sheath is formed from melt processable polymers such as polyarylene sulfide, polyimide, liquid crystalline polyester or polytetrafluoroethylene (the first polymer). In a preferred embodiment, the sheath contains polyphenylene sulfide having an estimated zero shear viscosity of from 230 to 270 Pa·s (2300 to 2700 Poise) when measured at 300°C and the core component is polyethyleneterephthalate.

The first and second polymers either alone or in combination may include polyolefin, polyester or polyamide in the second polymer and polyarylene sulfide, polyimide, liquid crystalline polyester or polytetrafluoroethylene in the first polymer provided the melting point of the sheath is at least 15°C higher than the melting point of the core.

The polymeric components forming the multicomponent fibers can include conventional additives and performance enhancers such as dyes, pigments, antioxidants, ultraviolet stabilizers, spin finishes, voltage endurance extenders and the like. The use of crystallinity enhancing additives in the polymeric compositions is optional.

In one embodiment of this invention the first polymer contains an optional amount of inorganic voltage endurance extender while the second polymer does not. Suitable voltage endurance extender materials include fumed silica and fumed titanium dioxide.

Prior art processes that form a non-woven sheet having multicomponent fibers can be used, including processes that form the sheet solely from multicomponent fibers in staple form. Such staple fiber non-wovens can be prepared by a number of methods known in the art, including carding or garneting, air-laying, or wet-laying of fibers. The staple fibers preferably have a dtex per filament between about 0.55 and 6.7 (a denier per filament between about 0.5 and 6.0) and a fiber length of between about 0.6 cm and 10 cm.

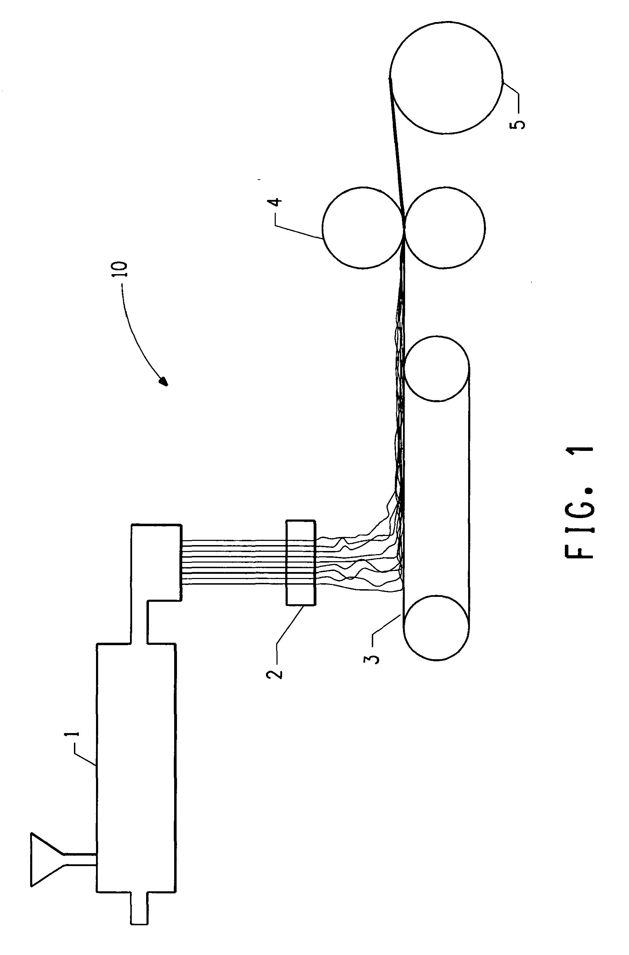

The fibers in the non-woven sheet can be continuous filaments directly spun into the sheet without any intentional cutting of the filaments. The non-woven sheet can be made from processes as is shown generally at 10 in Figure 1 to spin and consolidate continuous filament thermoplastic webs known in the art as spunbonding or meltblowing. Figure 1 depicts a melt extruder 1, a fiber attenuation and dispersion device 2, a conveyor table 3, a heated bonding calender 4 and a take-up roll 5. An attenuating force should be provided to the bundle of fibers by a rectangular slot jet. By spinning the fiber at line speeds from 3500 to 5000 m/min, a significant amount of the second polymer is crystallized while the first polymer is not. Multiple component spunbonded webs suitable for preparing laminate parts can be prepared using methods known in the art, for example as described in United States Patent No 6,548,431 to Bansal et al. Multicomponent fibers can be incorporated into a non-woven sheet by melt spinning fibers from spinning beams having a large number of holes onto a moving horizontal belt as disclosed in United States Patent No. 5,885,909 to Rudisill et al. Continuous filament webs suitable for preparing the non-woven fabrics preferably comprise continuous filaments having a dtex per filament between 0.55 and 22.2 (a denier per filament between 0.5 and 20) with a preferred dtex per filament range of 1.1 and 5.6 (denier per filament range of 1 and 5).

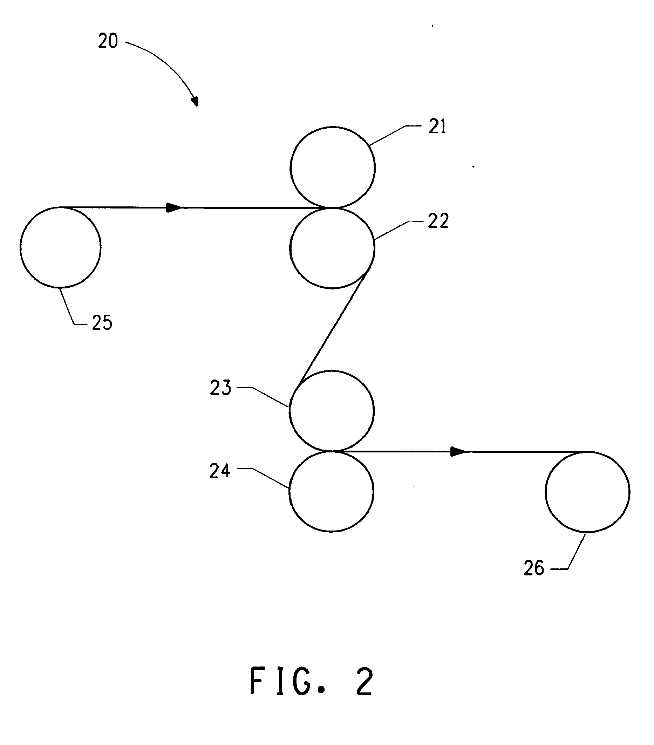

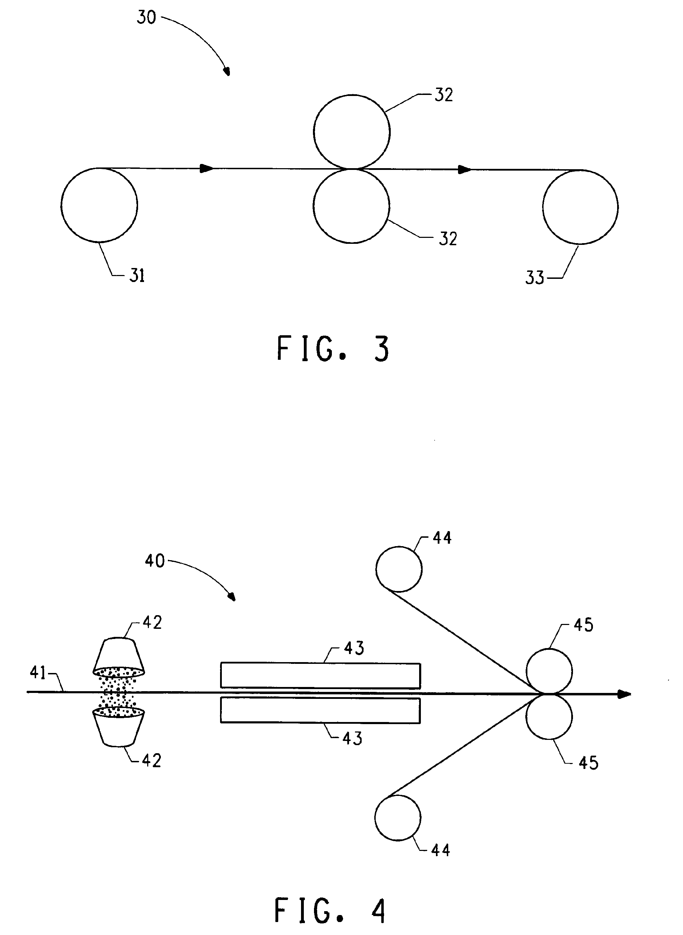

The non-woven sheet must be subjected to a further calendering step as shown generally at 20 in Figure 2 to give a sheet having the desired level of porosity, degree of crystallinity of the first polymer and basis weight. In Figure 2, there is a feed roll 25, as series of smooth calendering rolls 21 to 24 and a take-up roll 26. The number of calendering rolls may be increased or decreased as required. Figure 3 shows an alternative configuration of calendaring rolls. Shown generally at 30 is a feed roll 31, two smooth calendering rolls 32 and a take-up roll 33. By smooth calendaring we mean that the rolls are smooth and free of any embossed pattern. This calendaring step may be carried out as a separate operation or integrated into the web forming line of Figure 1 and located after the filament bonding rolls. During the calendering process, the sheath polymer, which is substantially amorphous, flows, becomes substantially crystalline and forms a continuous phase. Some increase in crystallinity of the core material is also observed. The core fibers, however, remain as discrete domains of fibrous filaments in a continuous phase of sheath material. Parameters necessary to give good calendered non-woven sheet properties such as roll temperature, roll pressure, line speed and contact time with the rollers vary depending on the polymeric composition of the fiber sheath and, to a lesser extent, to the polymeric composition of the core. Calendering can be carried out in the temperature range of from 90°C to 240°C with higher temperatures permitting faster line speeds. Preferable calendering conditions are about 200°C at a nip pressure of about 3500 N/cm. This produces a non-woven sheet or web having a basis weight in the range from 30 to 350 gsm. More preferably, the basis weight range is from 30 - 300 gsm and most preferably from 50 - 150 gsm. The calendering process did not cause any deterioration in the tear strength of the calendered non-woven sheet when compared to the tear strength of a non-calendered sheet made in accordance with Figure 1.

The non-woven sheet can be used with a film to make a composite laminate suitable for use in electrical insulation. In such a laminate, the film provides the desired dielectric properties and the low porosity non-woven sheet minimizes loss of those dielectric properties. The non-woven sheet is particularly suitable for extending voltage endurance in an electrical component. The film is positioned adjacent to, and attached to at least one non-woven sheet to form the composite. Where two non-woven sheets are used, the film is sandwiched between the two sheets which allow the composite laminate to be impregnated with a matrix resin or varnish either prior to installation in an electrical device, or after installation in the device. The impregnation resin may also include additives. The film is attached to the non-woven sheets by an adhesive which may be a film, liquid, powder or paste. The cure temperature of the adhesive must be lower than the melting point of the polymers of the fiber, preferably by at least ten degrees centigrade. Either a thermoset or thermoplastic adhesive may be used. A urethane adhesive is particularly suitable. In some circumstances, if a PPS film or a bondable film is employed, thermal lamination may also be possible. Suitable bondable films include PET films that have an amorphous PET layer or layers on the outside of a PET film. Suitable PPS films for thermal lamination include Torelina® PPS from Toray. Figure 4 shows, at 40, one embodiment of a process for producing an electrical insulation laminate. Adhesive is applied to one or both sides of a film 41, by means of spray heads 42, and then passed in to an oven 43 to remove the majority of the solvent present in the adhesive. Gravure coating is an alternative means of applying adhesive 42. A nonwoven sheet of this invention 44 is then placed on top of at least one surface of the film and the laminate subsequently consolidated in calendering rolls 45.

While a single layer non-woven sheet on either side of the film is a preferred embodiment, a multi-layer non-woven could be used as long as the layer of the multi-layer non-woven that is in contact with the film is made from the multicomponent fibers as previously described. Basis weight and thickness of the non-woven sheet is not critical and is dependent upon the end use of the final laminate. In some preferred embodiments the basis weight is 50 to 150 grams per square meter and the final thickness of the non-woven sheets in the laminate structure is 50 to 125 micrometers.

Any suitable film can be used. If a thermoplastic film is selected, useful examples include polyester, polyamide, poly (phenylene sulfide) (PPS), and/or other thermoplastic materials. The thermoplastic film can be a homogeneous material or it can be layered structure with different thermoplastics in different layers. In some embodiments, the preferred polyesters include poly (ethylene terephthalate), poly (ethylene naphthalate), and liquid crystalline polyesters.

Poly (ethylene terephthalate) (PET) can include a variety of comonomers, including diethylene glycol, cyclohexanedimethanol, poly(ethylene glycol), glutaric acid, azelaic acid, sebacic acid, isophthalic acid, and the like. In addition to these comonomers, branching agents like trimesic acid, pyromellitic acid, trimethylolpropane and trimethyloloethane, and pentaerythritol may be used. The poly (ethylene terephthalate) can be obtained by known polymerization techniques from either terephthalic acid or its lower alkyl esters (e.g. dimethyl terephthalate) and ethylene glycol or blends or mixtures of these. Poly (ethylene napthalate) (PEN) can be obtained by known polymerization techniques from 2,6 napthalene dicarboxylic acid and ethylene glycol. Examples of commercially available PET and PEN films are MYLAR® and TEONEX® films respectively, sold by DuPont-Teijin Films.

By "liquid crystalline polyester" (LCP) herein is meant polyester that is anisotropic when tested using the TOT test or any reasonable variation thereof, as described in United States Patent No. 4,118,372. One preferred form of liquid crystalline polyesters is fully aromatic. Possible LCP compositions for films and film types are described, for example, in United States Patent No. 5,248,530 to Jester et al. One commercially available example of PPS film is TORELINA® film sold by Toray Company.

Other materials, particularly those often found in or made for use in thermoplastic compositions may also be present in the film. These materials should preferably be chemically inert and reasonably thermally stable under the operating environment of the part in service. Such materials may include, for example, one or more of fillers, reinforcing agents, dyes, pigments, antioxidants, stabilizers and nucleating agents. Other polymers may also be present, thus forming polymer blends. In some embodiments, the composition can contain about 1 to about 55 weight percent of fillers and/or reinforcing agents, more preferably about 5 to about 40 weight percent of these materials.

In one embodiment the thermoplastic film can also contain an internal layer of thermoset material. For example, KAPTON® EKJ film, sold by DuPont, has thermoplastic polyimide outside layers with a thermoset polyimide layer inside the structure.

Thermal lamination processes to make the composite are well known in the art and include batch processes such as a platen press or vacuum bag or a continuous process such as a double belt press.

Insulation components made from laminates comprising a non-woven web of this invention include slot liners, closures, wedges and sticks.

In the following examples all parts and percentages are by weight and degrees in centigrade unless otherwise indicated. Examples prepared according to the current invention are indicated by numerical values. Control or Comparative Examples are indicated by letters. Data and test results relating to the Comparative and Inventive Examples are shown in Table 1.

### Test Methods

Tensile strength and elongation to break of the non-woven sheets were measured on an Instron-type testing machine using test specimens 2.54 cm wide and a gage length of 18 cm, in accordance with ASTM D 828-97. Only the machine direction results are reported.

Initial tear resistance was also measured on an Instron-type testing machine in accordance with ASTM D 1004-07 with a gauge length of 7.62 cm. Only the machine direction results are reported.

The thickness of non-woven sheets was measured in accordance with ASTM D374-99 Method E . The basis weight of the non-woven sheets was taken according to ASTM D 646-96.

Voltage endurance is determined according to ASTM D2275. The tests were performed at 23°C, with 250 V applied for every 0.001 inch of material at a frequency of 360 Hz,

The air resistances of the non-woven sheets were measured in accordance with TAPP1 T 460 om-02 as the amount of time to pass 100 ml of air through the sheets at a pressure differential of 1.22 kPA. The data is reported in seconds.

Melting points and enthalpies of fusion and crystallization were measured by ASTM Method D3418. Melting points are taken as the maximum of the melting endotherm and are measured on the first heating cycle using a Differential Scanning Calorimeter (DSC) at a heating rate of 10°C/min.

Average fiber diameter was determined as follows. A bundle of fibers was carefully collected just below the attenuating jet. The fiber bundle was then prepared for viewing under an optical microscope. A digital image of the fiber bundle was then captured with the aid of computer. The diameter of at least thirty (30) clearly distinguishable fine fibers were measured from the photographs and recorded. Defects were not included (i.e., lumps of fine fibers, polymer drops, intersections of fine fibers). The average (mean) fiber diameter for each sample was calculated.

X-ray diffraction samples were run on a PANalytical X'Pert MPD diffractometer using copper radiation. The analysis was run in reflection mode using fixed 1/2 deg. slits for the incident and diffracted beam optics and a 0.3mm receiving slit. This unit had a proportional detector with a curved graphite monochromator. Scan parameters were 5-40 degrees two-theta with a step size of 0.15 degree at 20 seconds per point. The instrument was calibrated using a sample of silicon provided by PANalytical.

Scanning Electron Microscope (SEM) imaging samples were cut from the appropriate examples and placed on aluminum SEM stubs. The stubs were placed in a sputter coater and coated for 80-100 seconds with a thin layer (1-2 angstroms) of gold/palladium. This coating serves as the necessary conductor for the SEM. The stubs were inserted in a mount and placed in the SEM chamber. After pumping down to vacuum, each sample is imaged at different magnifications, at working distances of 8-11mm in secondary emission (SE) mode. All images were captured and saved electronically. Some examples were soaked in hexaflouro isoproponol (HFIP) at room temperature for 3-4 hours to dissolve out the PET from the PET/PPS matrix. Samples of these examples were cut in to 2" X 6" strips and immersed in 100 ml of HFIP for 3-4 hours. After soaking, the samples were removed from the HFIP solution, rinsed with methanol and allowed to air dry.

### Examples

### Example 1

In this example, a bicomponent spunbond fabric was made from a poly(ethylene terephthalate) (PET) component and a poly(phenylene sulfide) (PPS) component. The PET component had an intrinsic viscosity of 0.63 d1/g and is available from E. I. DuPont de Nemours, Wilmington, DE under the tradename Crystar® polyester (Merge 4415). The PPS component, available from Ticona Engineering Polymers, Florence, KY under the tradename Fortron® PPS was a mixture of 70 wt% grade 0309 C1 and 30 wt% grade 0317 C1. The PPS component had an estimated zero shear viscosity of approximate 250 Pa·s (2500 Poise) measured at 300°C. The PET resin was dried in a through air dryer at a temperature of 120°C to a moisture content of less than 50 parts per million. The PPS resins were dried in a through air dryer at a temperature of 115°C to a moisture content of less than 150 parts per million. The PET polymers were heated in an extruder at 290°C and the PPS resins heated in a separate extruder at 295°C. The two polymers were metered to a spin-pack assembly where the two melt streams were separately filtered and then combined through a stack of distribution plates to provide multiple rows of spunbond fibers having sheath-core cross sections. Such processing is well known to those skilled in the art. The PET component comprised the core and the PPS component comprised the sheath.

A spin pack assembly consisting of 4316 round capillary openings was heated to 295°C and the PPS and PET polymers spun through each capillary at a polymer throughput rate of 0.8 g/hole/min. The PET component consisted of 70% by weight of the total weight of the spun bond fibers. The fibers were cooled in a cross flow quench extending over a length of 122 cm. An attenuating force was provided to the bundle of fibers by a rectangular slot jet. The distance between the spin-pack to the entrance of the jet was 92.5 cm. The fibers exiting the jet were collected on a forming belt traveling at 50.1 m/min. A vacuum was applied underneath the belt to help pin the fibers to the belt. The fibers had an average diameter of 14.5 microns. The spunbond layer was then passed between an embosser roll and an anvil roll as shown in Figure 1 to achieve filament to filament bonding. The bonding conditions were 135°C roll temperature and 875 N/cm nip pressure. After thermal bonding, the spunbond sheet was formed into a roll using a winder.

In an additional step, the non-woven web was then smooth-calendered to achieve further densification of the already bonded non-woven web. The process used is shown in Figure 2. Line speed was 18.3 m/min. Calender rolls 1 and 4 were smooth unheated rolls with a nylon composite shell having an outside diameter of 50 cm. Calender rolls 2 and 3 were heated stainless steel rolls having an outside diameter of 46 cm. The steel rolls were heated to a surface temperature of 200°C. The sheet was passed through a nip between calender rolls 1 and 2 under a nip pressure of 3100 N/cm. The sheet then traveled around Calender roll 2 and passed through the open nip between calender rolls 2 and 3. The sheet then wrapped around Calender roll 3 and through the nip between calender rolls 3 and 4. The nip pressure between calender rolls 3 and 4 was 3500 N/cm. After calendering, the spunbond sheet had a basis weight of 90 g/m².

### Example 2

In this example, a bicomponent spunbond fabric was made from a poly(ethylene terephthalate) (PET) component and a poly(phenylene sulfide) (PPS) component. The PET component had an intrinsic viscosity of 0.63 dl/g and is available from E. I. DuPont de Nemours under the tradename Crystal® polyester (Merge 4415). The PPS component, available from Ticona Engineering Polymers under the tradename Fortron® PPS was a mixture of 70 wt% grade 0309 C1 and 30 wt% grade 0317 C1. The PPS component had an estimated zero shear viscosity of approximately 250 Pa·s (2500 Poise) measured at 300°C. The PET resin was dried in a through air dryer at a temperature of 120°C to a moisture content of less than 50 parts per million. The PPS resins were dried in a through air dryer at a temperature of 115°C to a moisture content of less than 150 parts per million. The PET polymers were heated in an extruder at 290°C and the PPS resins heated in a separate extruder at 295°C. The two polymers were metered to a spin-pack assembly where the two melt streams were separately filtered and then combined through a stack of distribution plates to provide multiple rows of spunbond fibers having sheath-core cross sections. The PET component comprised the core and the PPS component comprised the sheath.

A spin pack assembly consisting of 2158 round capillary openings was heated to 295°C and the PPS and PET polymers spun through each capillary at a polymer throughput rate of 1.4 g/hole/min. The PET component consisted of 50% by weight of the total weight of the spun bond fibers. The fibers were cooled in a cross flow quench extending over a length of 122 cm. An attenuating force was provided to the bundle of fibers by a rectangular slot jet. The distance between the spin-pack to the entrance of the jet was 92.5 cm. The fibers exiting the jet were collected on a forming belt traveling at 43.8 m/min. The fibers had an average diameter of 17.5 microns. A vacuum was applied underneath the belt to help pin the fibers to the belt. The spunbond layer was then passed between an embosser roll and an anvil roll as shown in Figure 1 to achieve filament to filament bonding. The bonding conditions were 135°C roll temperature and 875 N/cm nip pressure. After thermal bonding, the spunbond sheet was formed into a roll using a winder.

The non-woven web was then smooth-calendered as in Example 1. After calendering, the spunbond sheet had a basis weight of 78 g/m².

An etched cross sectional view of this non woven web was examined under a scanning electron microscope. The etching medium was hexafluoroisopropanol (HFIP) which dissolved the polyester component but left the PPS material intact. The continuous crystalline phase of PPS could be clearly seen as well as voids where the PET fibrous component was removed.

### Example 3

In this example, a bicomponent spunbond fabric was made from a poly(ethylene terephthalate) (PET) component and a poly(phenylene sulfide) (PPS) component. The PET component had an intrinsic viscosity of 0.63 dl/g and is available from E. I. DuPont de Nemours under the tradename Crystar® polyester (Merge 4415). The PPS component, available from Ticona Engineering Polymers under the tradename Fortron® PPS was a mixture of 70 wt% grade 0309 C1 and 30 wt% grade 0317 C1. The PPS component had an estimated zero shear viscosity of approximately 250 Pa·s (2500 Poise) measured at 300°C. The PET resin was dried in a through air dryer at a temperature of 120°C to a moisture content of less than 50 parts per million. The PPS resins were dried in a through air dryer at a temperature of 115°C to a moisture content of less than 150 parts per million. The PET polymers were heated in an extruder at 290°C and the PPS resins heated in a separate extruder at 295°C. The two polymers were metered to a spin-pack assembly where the two melt streams were separately filtered and then combined through a stack of distribution plates to provide multiple rows of spunbond fibers having sheath-core cross sections. The PET component comprised the core and the PPS component comprised the sheath.

A spin pack assembly consisting of 4316 round capillary openings was heated to 295°C and the PPS and PET polymers spun through each capillary at a polymer throughput rate of 1.0 g/hole/min. The PET component consisted of 60% by weight of the total weight of the spun bond fibers. The fibers were cooled in a cross flow quench extending over a length of 122 cm. An attenuating force was provided to the bundle of fibers by a rectangular slot jet. The distance between the spin-pack to the entrance of the jet was 92.5 cm. The fibers exiting the jet were collected on a forming belt traveling at 65.9 m/min. A vacuum was applied underneath the belt to help pin the fibers to the belt. The spunbond layer was then passed between an embosser roll and an anvil roll as shown in Figure 1 to achieve filament to filament bonding. The bonding conditions were 135°C roll temperature and 1050 N/cm nip pressure. After thermal bonding, the spunbond sheet was formed into a roll using a winder.

The non-woven web was then smooth-calendered as in Example 1. After calendering, the spunbond sheet had a basis weight of 76 g/m².

### Example 4

In this example, a bicomponent spunbond fabric was made from poly(ethylene terephthalate) (PET) component and a poly(phenylene sulfide) (PPS) component. The PET component had an intrinsic viscosity of 0.67 dl/g and is available from E. I. DuPont de Nemours under the tradename Crystal® polyester (Merge 4434). The PPS component, available from Ticona Engineering Polymers under the tradename Fortron® PPS, was a mixture of 70 wt% grade 0309 C1 and 30 wt% grade 0317 C1. The PPS component had an estimated zero shear viscosity of approximately 250 Pa·s (2500 Poise) measured at 300°C. The PET resin was dried in a through air dryer at a temperature of 120°C to a moisture content of less than 50 parts per million. The PPS resins were dried in a through air dryer at a temperature of 115°C to a moisture content of less than 150 parts per million. The PET polymers were heated in an extruder at 290°C and the PPS resins heated in a separate extruder at 295°C. The two polymers were metered to a spin-pack assembly where the two melt streams were separately filtered and then combined through a stack of distribution plates to provide multiple rows of spunbond fibers having sheath-core cross sections. The PET component comprised the core and the PPS component comprised the sheath.

A spin pack assembly consisting of 4316 round capillary openings was heated to 295°C and the PPS and PET polymers spun through each capillary at a polymer throughput rate of 0.8 g/hole/mim. The PET component consisted of 70% by weight of the total weight of the spun bond fibers. The fibers were cooled in a cross flow quench extending over a length of 122 cm. An attenuating force was provided to the bundle of fibers by a rectangular slot jet. The distance between the spin-pack to the entrance of the jet was 92.5 cm. The fibers exiting the jet were collected on a forming belt traveling at 52.7 m/min. A vacuum was applied underneath the belt to help pin the fibers to the belt. The spunbond layer was then passed between an embosser roll and an anvil roll as shown in Figure 1 to achieve filament to filament bonding. The bonding conditions were 135°C roll temperature and 1050 N/cm nip pressure. After thermal bonding, the spunbond sheet was formed into a roll using a winder.

The non-woven web was then smooth-calendered as in Example 1. After calendering, the spunbond sheet had a basis weight of 78 g/m².

### Example 5

In this example, a bicomponent spunbond fabric was made from poly (ethylene terephthalate) (PET) component and a poly(phenylene sulfide) (PPS) component. The PET component had an intrinsic viscosity of 0.63 dl/g and is available from E.I. DuPont de Nemours under the tradename Crystal® polyester (Merge 4415). The PPS component had a melt flow index of 101 g / 10min at 316°C under a load of 2.16 kg and is available from Ticona Engineering Polymers under the tradename Fortron PPS 0309 C1. The PET resin was dried in a through air dryer at a temperature of 120°C to a moisture content of less than 50 parts per million. The PPS resins were dried in a through air dryer at a temperature of 115°C to a moisture content of less than 150 parts per million. The PET polymers were heated in an extruder at 290°C and the PPS resins heated in a separate extruder at 295°C. The two polymers were metered to a spin-pack assembly where the two melt streams were separately filtered and then combined through a stack of distribution plates to provide multiple rows of spunbond fibers having sheath-core cross sections. The PET component comprised the core and the PPS component comprised the sheath.

A spin pack assembly consisting of 4316 round capillary openings was heated to 295°C and the PPS and PET polymers spun through each capillary at a polymer throughput rate of 0.8 g/hole/min. The PET component consisted of 50% by weight of the total weight of the spun bond fibers. The fibers were cooled in a cross flow quench extending over a length of 122 cm. An attenuating force was provided to the bundle of fibers by a rectangular slot jet. The distance between the spin-pack to the entrance of the jet was 92.5 cm. The fibers exiting the jet were collected on a forming belt traveling at 50.1. The fibers had an average diameter of 14.5 microns. A vacuum was applied underneath the belt to help pin the fibers to the belt. The spunbond layer was then passed between an embosser roll and an anvil roll as shown in figure 1 to achieve filament to filament bonding. The bonding conditions were 120°C roll temperature and 350 N/cm nip pressure. After thermal bonding, the spunbond sheet was formed into a roll using a winder.

The non-woven web was then smooth-calendered as in Example 1. After calendering, the spunbond sheet had a basis weight of 83 g/m².

### Example 6

In this example, a bicomponent spunbond fabric was made from poly(ethylene terephthalate) (PET) component and a poly(phenylene sulfide) (PPS) component. The PET component had an intrinsic viscosity of 0.63 dl/g and is available from E. I. DuPont de Nemours under the tradename Crystar® polyester (Merge 4415). The PPS component, available from Ticona Engineering Polymers under the tradename Fortron® PPS, was a mixture of 70 wt% grade 0309 C1 and 30 wt% grade 0317 C1. The PPS component had an estimated zero shear viscosity of approximately 250 Pa·s (2500 Poise) measured at 300°C. The PET resin was dried in a through air dryer at a temperature of 120°C to a moisture content of less than 50 parts per million. The PPS resins were dried in a through air dryer at a temperature of 115°C to a moisture content of less than 150 parts per million. The PET polymers were heated in an extruder at 290°C and the PPS resins heated in a separate extruder at 295°C. The two polymers were metered to a spin-pack assembly where the two melt streams were separately filtered and then combined through a stack of distribution plates to provide multiple rows of spunbond fibers having sheath-core cross sections. The PET component comprised the core and the PPS component comprised the sheath.

A spin pack assembly consisting of 4316 round capillary openings was heated to 295°C and the PPS and PET polymers spun through each capillary at a polymer throughput rate of 1.0 g/hole/min. The PET component consisted of 50% by weight of the total weight of the spun bond fibers. The fibers were cooled in a cross flow quench extending over a length of 122 cm. An attenuating force was provided to the bundle of fibers by a rectangular slot jet. The distance between the spin-pack to the entrance of the jet was 92.5 cm. The fibers exiting the jet were collected on a forming belt traveling at 83.4 m/min. A vacuum was applied underneath the belt to help pin the fibers to the belt. The spunbond layer was then passed between an embosser roll and an anvil roll as shown in Figure 1 to achieve filament to filament bonding. The bonding conditions were 135°C roll temperature and 875 N/cm nip pressure. After thermal bonding, the spunbond sheet was formed into a roll using a winder.

The non-woven web was then smooth-calendered as in Example 1. After calendering the spunbond sheet had a basis weight of 53 g/m².

### Example 7

In this example, a bicomponent spunbond fabric was made from poly(ethylene terephthalate) (PET) component and a poly(phenylene sulfide) (PPS) component. The PET component had an intrinsic viscosity of 0.63 dl/g and is available from E. I. DuPont de Nemours under the tradename Crystal® polyester (Merge 4415). The PPS component, available from Ticona Engineering Polymers under the tradename Fortron® PPS, was a mixture of 70 wt% grade 0309 C1 and 30 wt% grade 0317 C1. The PPS component has an estimated zero shear viscosity of approximately 250 Pa·s (2500 Poise) measured at 300°C. The PET resin was dried in a through air dryer at a temperature of 120°C to a moisture content of less than 50 parts per million. The PPS resins were dried in a through air dryer at a temperature of 115°C to a moisture content of less than 150 parts per million. The PET polymers were heated in an extruder at 290°C and the PPS resins heated in a separate extruder at 295°C. The two polymers were metered to a spin-pack assembly where the two melt streams were separately filtered and then combined through a stack of distribution plates to provide multiple rows of spunbond fibers having sheath-core cross sections. The PET component comprised the core and the PPS component comprised the sheath.

A spin pack assembly consisting of 4316 round capillary openings was heated to 295°C and the PPS and PET polymers spun through each capillary at a polymer throughput rate of 1.0 g/hole/min. The PET component consisted of 50% by weight of the total weight of the spun bond fibers. The fibers were cooled in a cross flow quench extending over a length of 122 cm. An attenuating force was provided to the bundle of fibers by a rectangular slot jet. The distance between the spin-pack to the entrance of the jet was 92.5 cm. The fibers exiting the jet were collected on a forming belt traveling at 71.5 m/min. A vacuum was applied underneath the belt to help pin the fibers to the belt. The spunbond layer was then passed between an embosser roll and an anvil roll as shown in Figure 1 to achieve filament to filament bonding. The bonding conditions were 145°C roll temperature and 875 N/cm nip pressure. After thermal bonding, the spunbond sheet was formed into a roll using a winder. A DSC spectrum of this non-woven web material had an exothermic peak or cold crystallization peak of 11.63 J/g at 119°C associated with the enthalpy of crystallization of one or both components, and endothermic peaks of 24.08 J/g at 258°C and 12.37 J/g at 281°C, associated with the melting points of the PET and the PPS components respectively. A wide angle X-ray diffraction pattern was taken of this spunbond sheet and showed no evidence of PPS crystallinity in the spectrum. Some PET crystallinity was evident.

The non-woven web was then smooth-calendered as in Example 1. After calendering, the spunbond sheet had a basis weight of 68 g/m². A DSC spectrum of the material after this smooth calendering step had no exothermic peak at 119°C but the endothermic peaks at 258°C and 281°C, associated with the enthalpy of fusion of the PET and PPS components remained. Based on the mass of PPS, which comprised 50 wt% of this example, the difference in magnitude between the enthalpy of crystallization before calendering and the PPS enthalpy of fusion after calendering was 1.42 J/g. The difference between the two DSC spectra of Example 7 indicates that the additional smooth calendering process step significantly increases the degree of crystallinity of the components of the fiber. They are now substantially crystalline. A wide angle X-ray diffraction pattern was taken of the calendered spunbond sheet and showed peaks associated with PPS crystallinity. In addition the peaks associated with PET crystallinity increased in intensity. This again confirms that the calendering, step converts amorphous PPS into a crystalline phase and further enhances PET crystallinity. The reference document for identifying crystalline PPS in both the uncalendered and calendered sheets is "X-Ray Diffraction Analysis Technique for Determining the Polymer Crystallinity in a Polyphenylene Sulfide Composite by Lee et al, Polymer Composites, December 1995, Vol. 16, No 6, pages 481 to 488.

### Example 8

In this example, a bicomponent spunbond fabric was made from a poly(ethylene terephthalate) (PET) component and a poly(phenylene sulfide) (PPS) component. The PET component had an intrinsic viscosity of 0.63 dl/g and is available from E. I. DuPont de Nemours, Wilmington, DE under the tradename Crystar® polyester (Merge 4415). The PPS component, available from Ticona Engineering Polymers, Florence, KY under the tradename Fortron® PPS was a mixture of 70 wt% grade 0309 C1 and 30 wt% grade 0317 C1. The PPS component had an estimated zem shear viscosity of approximately 250 Pa·s (2500 Poise) measured at 300°C. The PET resin was dried in a through air dryer at a temperature of 120°C to a moisture content of less than 50 parts per million. The PPS resins were dried in a through air dryer at a temperature of 115°C to a moisture content of less than 150 parts per million. The PET polymers were heated in an extruder at 290°C and the PPS resins heated in a separate extruder at 295°C. The two polymers were metered to a spin-pack assembly where the two melt streams were separately filtered and then combined through a stack of distribution plates to provide multiple rows of spunbond fibers having sheath-core cross sections. Such processing is well known to those skilled in the art. The PET component comprised the core and the PPS component comprised the sheath.

A spin pack assembly consisting of 4316 round capillary openings was heated to 295°C and the PPS and PET polymers spun through each capillary at a polymer throughput rate of 1.1 g/hole/min. The PET component consisted of 70% by weight of the total weight of the spun bond fibers. The fibers were cooled in a cross flow quench extending over a length of 122 cm. An attenuating force was provided to the bundle of fibers by a rectangular slot jet. The distance between the spin-pack to the entrance of the jet was 92.5 cm. The fibers exiting the jet were collected on a forming belt traveling at 91.8 m/min. A vacuum was applied underneath the belt to help pin the fibers to the belt. The spunbond layer was then passed between an embosser roll and an anvil roll as shown in Figure 1 to achieve filament to filament bonding. The bonding conditions were 135°C roll temperature and 875 N/cm nip pressure. After thermal bonding, the spunbond sheet was formed into a roll using a winder.

In an additional step, the non-woven web was then smooth-calendered to achieve further densification of the already bonded non-woven web. The web was passed between 2 heated stainless steel rolls having a diameter of 76.2 cm at a nip pressure of 4200 N/cm, as shown in Figure 3. The line speed was 61 m/min and the rolls were heated to a temperature of 200°C. After calendering, the spunbond sheet had a basis weight of 51g/m².

An electrical insulation laminate was made comprising a layer of the nonwoven of Example 8 attached, by means of a spray adhesive, to both sides of a polyethyleneterephthalate (PET) film. The PET film was a 0.076 mm thick and was obtained from DuPont Teijin films under the tradename Mylar® EL. The adhesive used to bond the non-woven sheet to the film was Super 77 Spray Adhesive supplied by 3M Corporation. The laminate was formed at room temperature by spraying adhesive on to one side PET film, placing the calendered spunbond over the film, and rolling over the laminate using a 2.3 kg rubber coated hand roller. This procedure was then followed a second time to attach the calendered spunbond to the other side of the film. A sample of the laminate was tested for voltage endurance and had a median hours to failure of 72.2 hours.

### Example 9

In this example, a bicomponent spunbond fabric was made from a poly(ethylene terephthalate) (PET) component and a poly(phenylene sulfide) (PPS) component. The PET component bad an intrinsic viscosity of 0.63 dl/g and is available from E. I. DuPont de Nemours, Wilmington, DE under the tradename Crystar® polyester (Merge 4415). The PPS component, available from Ticona Engineering Polymers, Florence, KY under the tradename Fortron® PPS was a mixture of 70 wt% grade 0309 C1 and 30 wt% grade 0317 C1. The PPS component had an estimated zero shear viscosity of approximately 250 Pa·s (2500 Poise) measured at 300°C. The PET resin was dried in a through air dryer at a temperature of 120°C to a moisture content of less than 50 parts per million. The PPS resins were dried in a through air dryer at a temperature of 115°C to a moisture content of less than 150 parts per million. The PET polymers were heated in an extruder at 290°C and the PPS resins heated in a separate extruder at 295°C. The two polymers were metered to a spin-pack assembly where the two melt streams were separately filtered and then combined through a stack of distribution plates to provide multiple rows of spunbond fibers having sheath-core cross sections. Such processing is well known to those skilled in the art. The PET component comprised the core and the PPS component comprised the sheath.

A spin pack assembly consisting of 4316 round capillary openings was heated to 295°C and the PPS and PET polymers spun through each capillary at a polymer throughput rate of 1.1 g/hole/min. The PET component consisted of 70% by weight of the total weight of the spun bond fibers. The fibers were cooled in a cross flow quench extending over a length of 122 cm. An attenuating force was provided to the bundle of fibers by a rectangular slot jet. The distance between the spin-pack to the entrance of the jet was 92.5 cm. The fibers exiting the jet were collected on a forming belt traveling at 91.8 m/min. A vacuum was applied underneath the belt to help pin the fibers to the belt. The spunbond layer was then passed between an embosser roll and an anvil roll as shown in Figure 1 to achieve filament to filament bonding. The bonding conditions were 135°C roll temperature and 875 N/cm nip pressure. After thermal bonding, the spunbond sheet was formed into a roll using a winder.

In an additional step, the non-woven web was then smooth-calendered to achieve further densification of the already bonded non-woven web. The web was passed between 2 heated stainless steel rolls having a diameter of 76.2 cm at a nip pressure of 4200 N/cm as shown in Figure 3. The line speed was 61 m/min and the rolls were heated to a temperature of 200°C. After calendering, the spunbond sheet had a basis weight of 51g/m².

An electrical insulation laminate was made comprising a layer of the nonwoven of Example 9 attached, by means of an adhesive, to both sides of a polyethyleneterephthalate (PET) film. The adhesive was applied by gravure rolls. The PET film was a 0.051 mm thick. A solvent-borne thermosetting adhesive was applied to both sides of the PET film. The film was then heated to remove the majority of the solvent. The calendered spunbond was then attached to both sides of the film and passed through a nip. A sample of the laminate was tested for voltage endurance and had a median hours to failure of 302.3 hours.

### Example 10

In this example, a bicomponent spunbond fabric was made from a poly(ethylene terephthalate) (PET) component and a poly(phenylene sulfide) (PPS) component. The PET component had an intrinsic viscosity of 0.63 dl/g and is available from E. I. DuPont de Nemours, Wilmington, DE under the tradename Crystar® polyester (Merge 4415). The PPS component, available from Ticona Engineering Polymers, Florence, KY under the tradename Fortron® PPS was a mixture of 70 wt% grade 0309 C1 and 30 wt% grade 0317 C1. The PPS component had an estimated zero shear viscosity of approximately 250 Pa·s (2500 Poise) measured at 300°C. The PET resin was dried in a through air dryer at a temperature of 120°C to a moisture content of less than 50 parts per million. The PPS resins were dried in a through air dryer at a temperature of 115°C to a moisture content of less than 150 parts per million. The PET polymers were heated in an extruder at 290°C and the PPS resins heated in a separate extruder at 295°C. The two polymers were metered to a spin-pack assembly where the two melt streams were separately filtered and then combined through a stack of distribution plates to provide multiple rows of spunbond fibers having sheath-core cross sections. Such processing is well known to those skilled in the art. The PET component comprised the core and the PPS component comprised the sheath.

A spin pack assembly consisting of 4316 round capillary openings was heated to 295°C and the PPS and PET polymers spun through each capillary at a polymer throughput rate of 1.1 g/hole/min. The PET component consisted of 70% by weight of the total weight of the spun bond fibers. The fibers were cooled in a cross flow quench extending over a length of 122 cm. An attenuating force was provided to the bundle of fibers by a rectangular slot jet. The distance between the spin-pack to the entrance of the jet was 92.5 cm. The fibers exiting the jet were collected on a forming belt traveling at 91.8 m/min. A vacuum was applied underneath the belt to help pin the fibers to the belt. The spunbond layer was then passed between an embosser roll and an anvil roll as shown in Figure 1 to achieve filament to filament bonding. The bonding conditions were 135°C roll temperature and 875 N/cm nip pressure. After thermal bonding, the spunbond sheet was formed into a roll using a winder.

In an additional step, the non-woven web was then smooth-calendered to achieve further densification of the already bonded non-woven web. The web was passed between 2 heated stainless steel rolls having a diameter of 76.2 cm at a nip pressure of 4200 N/cm as shown in Figure 3. The line speed was 61 m/min and the rolls were heated to a temperature of 200°C. After calendering, the spunbond sheet had a basis weight of 51 g/m².

An electrical insulation laminate was made comprising a layer of the nonwoven of Comparative Example G attached, by means of an adhesive, to one side of a polyethyleneterephthalate (PET) film. The adhesive was applied by gravure rolls. The PET film was a 0.051 mm thick. A layer of Nomex® paper type 464, having a thickmess of 0.038 mm was attached to the other side of the film. A solvent-borne thermosetting adhesive was applied to both sides of the PET film. The film was then heated to remove the majority of the solvent. The calendered spunbond was then attached to one side of the film, while the Nomex® paper was applied to the other side of the film, and passed through a nip. A sample of the laminate was tested for voltage endurance and had a median hours to failure of 157.1 hours.

### Comparative Example A

In this example, a single component spunbond fabric was made from poly(phenylene sulfide) (PPS). The PPS had a melt flow index of 101 g / 10min at 316°C under a load of 2.16 kg and is available from Ticona Engineering Polymers under the tradename Fortron PPS 0309 C 1. The PPS resin was dried in a through air dryer at a temperature of 105°C to a moisture content of less than 150 parts per million. The polymer was heated in an extruder to 295°C. The polymer was metered to a spin-pack assembly where the melt stream was filtered and then distributed through a stack of distribution plates to provide multiple rows of spunbond fibers.

The spin pack assembly consisted of 4316 round capillary openings. The spin-pack assembly was heated to 290°C and the polymer was spun through each capillary at a polymer throughput rate of 1.2 g/hole/min. The fibers were cooled in a cross flow quench extending over a length of 122 cm. An attenuating force was provided to the bundle of fibers by a rectangular slot jet. The distance between the spin-pack to the entrance of the jet was 127 cm. The fibers exiting the jet were collected on a forming belt traveling at 108 m/min. A vacuum was applied underneath the belt to help pin the fibers to the belt. The spunbond layer was then passed between an embosser roll and an anvil roll as shown in Figure 1 to achieve filament to filament bonding. The bonding conditions were 145°C roll temperature and 700 N/cm nip pressure. After thermal bonding, the spunbond sheet was formed into a roll using a winder.

The non-woven web was then smooth-calendered as in Example 1. After calendering, the spunbond sheet had a basis weight of 66 g/m².

### Comparative Example B

In this example, a single component carded non-woven web made from discontinuous poly(phenylene sulfide) (PPS) staple fibers was obtained from Bondex, Inc., Trenton, SC. The grade of material was R073G008. A DSC spectrum of this material had an exothermic peak of 0.5733 J/g at 122.5°C, associated with the enthalpy of crystallization of the PPS, and endothermic peak of 58.35 J/g at 281.2°C, associated with the enthalpy of fusion of the PPS. This non-woven web was then smooth-calendered as in Example 1. After smooth calendering, the spunbond sheet had a basis weight of 86 g/m². A DSC spectrum of this post calendered material had an exothermic peak of 1.064 J/g at 123.0°C, associated with the enthalpy of crystallization of the PPS, and endothermic peak of 57.59 J/g at 281.2°C, associated with the enthalpy of fusion of the PPS. Based on the mass of the PPS, the difference in magnitude between the enthalpy of crystallization before calendering and the PPS enthalpy of fusion after calendering was 57.02 J/g. A comparison between the two DSC spectra of this example indicates that the material, as received, was already highly crystalline and calendering did not further increase crystallinity.

### Comparative Example C

In this example, a bicomponent spunbond fabric was made from poly(ethylene terephthalate) (PET) component and a co-polyester (coPET) component. The PET component had an intrinsic viscosity of 0.63 dl/g and is available from E.I. du Pont de Nemours under the tradename Crystar® polyester (Merge 4415). The coPET component is a 17 weight percent modified di-methyl isophthalate PET copolymer also available from DuPont as Crystar® Merge 4446. The PET resin was dried in a through air dryer at a temperature of 120°C to a moisture content of less than 50 parts per million. The coPET resin was dried in a through air dryer at a temperature of 100°C, to a moisture content of less than 50 parts per million. The polymers were heated in separate extruders with the PET resin heated to 290°C and the coPET resin heated to 275°C. The two polymers were metered to a spin-pack assembly where the two melt streams were separately filtered and then combined through a stack of distribution plates to provide multiple rows of spunbond fibers having sheath-core cross sections. The PET component comprised the core and the coPET component comprised the sheath.

The spin pack assembly consisted of 4316 round capillary openings. The spin-pack assembly was heated to 295°C and the polymers were spun through each capillary at a polymer throughput rate of 0.8 g/hole/min. The PET component consisted of 70% by weight of the total weight of the spun bond fibers. The fibers were cooled in a cross flow quench extending over a length of 122 cm. An attenuating force was provided to the bundle of fibers by a rectangular slot jet. The distance between the spin-pack to the entrance of the jet was 127 cm. The fibers exiting the jet were collected on a forming belt. A vacuum was applied underneath the belt to help pin the fibers to the belt. The spunbond layer was then lightly bonded between an embosser roll and an anvil roll. The bonding conditions were 160°C roll temperature and 700 N/cm nip pressure. After thermal bonding, the spunbond sheet was formed into a roll using a winder.

The non-woven web was then further calendered as in Example 1 except that the line speed was 15.2 m/min, the steel roll temperatures were 110°C and the nip pressures were 1400 N/cm.. After calendering, the spunbond sheet had a basis weight of 70 g/m².

### Comparative Example D

In this example, a commercially available non-woven web was obtained from Innovative Paper Technologies, Tilton, NH. The web, marketed under the tradename ThermalShield comprised a blend of poly(phenylene sulfide) (PPS) and poly(ethylene terephthalate) (PET) fibers. The sheet had a thickness of 0.5 mm and a basis weight of 44 g/m². This non-woven was evaluated as received without any additional smooth calendering.

Table 1 is a summary of the key parameters relating to fiber production of the above examples and Table 2 lists the principal non-woven web features including mechanical test results of the webs made from these fibers.

The test results show that a calendered non-woven of PPS sheath / PET core fibers provides an extremely low porosity web, as measured by normalized air resistance, when compared with comparative examples of a non sheath / core construction or a sheath / core construction but of different polymeric components. The mechanical properties show a similar trend.

An etched cross sectional view of this non woven web was examined under a scanning electron microscope. The etching medium was hexafluoroisopropanol (HFIP) which dissolved the polyester component but left the PPS material intact. A discontinuous PPS phase could be clearly seen.

### Comparative Example E

An electrical insulation laminate was made comprising a layer of Nomex® paper type 464 attached, by means of a spray adhesive, to both sides of a PET film. The paper had a thickness of 0.053 mm and was obtained from DuPont, Wilmington DE. The PET film was 0.076 mm thick Mylar® EL. The adhesive used to bond the paper to the film was Super 77 Spray Adhesive. The laminate was formed at room temperature by spraying adhesive on to one side PET film, placing the calendered spunbond over the film, and rolling over the laminate using a 2.3 kg rubber coated hand roller. This procedure was then followed a second time to attach the calendered spunbond to the other side of the film. A sample of the laminate was tested for voltage endurance and had a median hours to failure of 37.6 hours.

### Comparative Example F

An electrical insulation laminate was made comprising a layer of ThermalShield® paper (a blend of poly(phenylene sulfide) (PPS) and poly(ethylene terephthalate) (PET) fibers) attached, by means of a spray adhesive, to both sides of a PET film. The paper had a thickness of 0.061 mm and was obtained from Innovative Paper Technologies. The PET film was 0.076 mm thick Mylar® EL. The adhesive used to bond the paper to the film was Super 77 Spray Adhesive. The laminate was formed at room temperature by spraying adhesive on to one side PET film, placing the calendered spunbond over the film, and rolling over the laminate using a 2.3 kg rubber coated hand roller. This procedure was then followed a second time to attach the calendered spunbond to the other side of the film. A sample of the laminate was tested for voltage endurance and had a median hours to failure of 16.1 hours.

### Comparative Example G

In this example, an electrical insulation laminate was made comprising a layer of Nomex® paper type 464 attached, by means of an adhesive, to both sides of a PET film. The adhesive was applied by gravure rolls. The PET film was a 0.051 mm thick. The paper had a thickness of 0.053 mm and was obtained from DuPont, Wilmington DE. A solvent-borne thermosetting adhesive was applied to both sides of the PET film. The film was then heated to remove the majority of the solvent. The Nomex® paper was then attached to both sides of the film and passed through a nip. A sample of the laminate was tested for voltage endurance and had a median hours to failure of 37.6 hours.

A comparison of the voltage endurance performance between Examples 8, 9 and 10 with Comparative Examples E, F and G is shown in Table 3 and clearly demonstrates the advantage of the non-woven sheet of this invention when compared with other paper materials traditionally used in electrical insulation laminates. Replacement of only one of the outer layers of the laminate as per Example 10 still gives very good mean hours to failure performance.

It was also observed that the normalized air resistance of the nonwoven sheets of this invention was, in most cases, considerably better than that of the Comparative Examples.

| | | | Table 1 - Fiber Production | | | | | |
|---|---|---|---|---|---|---|---|---|
| | | | | | | | | |

| Example | PPS/PET Ratio | Core Polymer Melt Point (Deg. C) | Sheath Polymer Melt Point (Deg. C) | PET Crystar Merge # | Fortron PPS Blend % (Grade 0309/0317) | # of Spinning Capillaries | Hole Throughput Rate (g/hole/min) | Average Fiber Diameter (microns) |
|---|---|---|---|---|---|---|---|---|
| | | | | | | | | |
| 1 | 30/70 | 260 | 280 | 4415 | 70/30 | 4316 | 0.8 | 14.5 |
| 2 | 50/50 | 260 | 280 | 4415 | 70/30 | 2158 | 1.4 | 17.5 |
| 3 | 40/60 | 260 | 280 | 4415 | 70/30 | 4316 | 1 | Not Measured |
| 4 | 30/70 | 260 | 280 | 4434 | 70/30 | 4316 | 0.8 | Not Measured |
| 5 | 50/50 | 260 | 280 | 4415 | 100/0 | 4316 | 0.8 | 16.5 |
| 6 | 50/50 | 260 | 280 | 4415 | 70/30 | 4316 | 1 | Not Measured |
| 7 | 50/50 | 260 | 280 | 4415 | 70/30 | 4316 | 1 | Not Measured |
| 8 | 30/70 | 260 | 280 | 4415 | 70/30 | 4316 | 1.1 | Not Measured |
| 9 | 30/70 | 260 | 280 | 4415 | 70/30 | 4316 | 1.1 | Not Measured |
| 10 | 30/70 | 260 | 280 | 4415 | 70/30 | 4316 | 1.1 | Not Measured |
| | | | | | | | | |
| Comp. A | 100/0 | Not Known | N/A | N/A | 100/0 | 4316 | 1.2 | Not Measured |
| Comp. B | 100/0 | Not Known | N/A | N/A | Not Known | N/A | N/A | Not Measured |
| Comp. C | 0/100 | 260 | 220 | 4415 & 4446 | N/A | 4316 | 0.8 | Not Measured |
| Comp. D | Not Known | 260 | 280 | N/A | N/A | N/A | N/A | Not Measured |
| | | | | N/A = Not Applicable | | | | |

| | | | | | Table 2 - Nonwoven Web Production & Evaluation | | | | | | |
|---|---|---|---|---|---|---|---|---|---|---|---|
| | | | | | | | | | | | |

| Example | PPS/PET Ratio | Forming Belt Line Speed (m/min) | Filament Bonding Roll Temp (°C) / Pressure (N/cm) | Smooth Calendered | Thickness (microns) | Basis Weight (g/m^2) | Air Resistance (s) | Normalized Air Resistance (s/(g/m^2)) | MD Tensile Strength (N) | MD Elongation to Break (%) | MD Initial Tear Resistance (N) |
|---|---|---|---|---|---|---|---|---|---|---|---|
| | | | | | | | | | | | |
| 1 | 30/70 | 50.1 | 135 / 875 | Yes | 96 | 90 | 51 | 0.567 | 144 | 35.7% | 25.8 |
| 2 | 50/50 | 43.8 | 135 / 875 | Yes | 79 | 78 | 61 | 0.782 | 138 | 20.1% | 16.8 |
| 3 | 40/60 | 65.9 | 135 / 1050 | Yes | 80 | 76 | 67 | 0.882 | 122 | 20.8% | 17.6 |
| 4 | 30/70 | 52.7 | 135 / 1050 | Yes | 80 | 78 | 34 | 0.436 | 135 | 33.4% | 19.9 |
| 5 | 50/50 | 50.1 | 120 / 350 | Yes | 84 | 83 | 368 | 4.434 | 111 | 18.2% | 16.1 |
| 6 | 50/50 | 83.4 | 135 / 875 | Yes | 59 | 53 | 14.1 | 0.266 | 84.8 | 17.2% | 11.8 |
| 7 | 50/50 | 71.5 | 145 / 875 | Yes | 70 | 68 | 32 | 0.470 | 119 | 16.9% | 13.3 |
| 8 | 30/70 | 91.8 | 135 / 875 | Yes | | 51 | | | | | |
| 9 | 30/70 | 91.8 | 135 / 875 | Yes | | 51 | | | | | |
| 10 | 30/70 | 91.8 | 135/875 | Yes | | 51 | | | | | |
| | | | | | | | | | | | |
| Comp. A | 100/0 | 108.2 | 145 / 300 | Yes | 100 | 66 | 0** | 0.000 | 65.3 | 4.1% | 11.2 |
| Comp. B | 100/0 | | | Yes | 149 | 86 | 0** | 0.000 | 67.0 | 14.4% | 12.3 |
| Comp. C | 0/100 | | | Yes | 131 | 70 | 0** | 0.000 | 97.3 | 23.7% | 19.3 |
| Comp. D | Not Known | | | No | 62 | 44 | 2.0* | 0.045 | 63.2 | 6.8% | 5.7 |
| | | | | | | | | | | | |
| | | MD = Machine Direction | | | | | N/A = Not Applicable | | | | |
| | | * Calculated from the time to pass 300 ml of air at a pressure differential of 1.22 kPA. | | | | | | | | | |
| | | ** Air resistance too low to be measured | | | | | | | | | |

| | | Table 3 | | |
|---|---|---|---|---|
| | | | | |

| Example | Upper Nonwoven Layer | Core Film | Lower Nonwoven Layer | Median Hours to Failure |
|---|---|---|---|---|
| | | | | |
| 8 | PPS/PET @ 51 gsm | PET @ 0.076 mm | PPS/PET @ 51 gsm | 72.2 |
| 9 | PPS/PET @ 51 gsm | PET @ 0.051 mm | PPS/PET @ 51 gsm | 302.3 |
| 10 | PPS/PET @ 51 gsm | PET @ 0.051 mm | Nomex 464 @ 0.038 mm | 157.1 |
| | | | | |
| E | Nomex 464 @ 0.053 mm | PET @ 0.076 mm | Nomex 464 @ 0.053 mm | 37.6 |
| F | ThermalShield @ 0.061 mm | PET @ 0.076 mm | ThermalShield @ 0.061 mm | 16.1 |
| G | Nomex 464 @ 0.053 mm | PET @ 0.051 mm | Nomex 464 @ 0.053 mm | 37.6 |
| | | | | |

## Claims

1. A non-woven sheet comprising:
a network of substantially-continuous thermoplastic polymer filaments, the polymer filaments each individually comprising a plurality of polymers including at least a first polymer and a second polymer, the melting point of the first polymer being at least 15 degrees C higher than the melting point of the second polymer, the individual polymer filaments further **characterized in that**
(1) the first polymer comprises from 10 to 70 weight percent of the total weight of the first and second polymer,
(2) the second polymer comprises from 30 to 90 weight percent of the total weight of the first and second polymer and,
the network of filaments being consolidated and fused such that
(a) the first polymer forms a continuous phase in the fused consolidated network and
(b) the second polymer forms a disperse phase in the fused consolidated network.

2. The non-woven sheet of claim 1, wherein the first polymer is selected from the group consisting of polyarylene sulfide, polyimide, liquid crystalline polyester, fluoropolymer and mixtures thereof.

3. The non-woven sheet of claim 2, wherein the polyarylene sulfide is polyphenylene sulfide.

4. The non-woven sheet of claim 1, wherein the second polymer is selected from the group consisting of polyolefin, polyester, polyamide and mixtures thereof.

5. The non-woven sheet of claim 2, wherein the polyester is polyethylene terephthalate.

6. An electrical insulation component for an electrical device comprising the non-woven sheet of claim 1.

7. Insulation useful for an electrical device comprising one or more non-woven sheets of any one of claims 1 to 5 positioned adjacent to, and attached to at least one side of a polymeric film.

8. The insulation of claim 7, wherein the polymeric film is a polyester film.

9. The insulation of claim 7 having the form of a slot liner, a closure, a wedge or a stick.

10. An electrical device comprising the insulation of claim 7.

11. A method for producing a non-woven sheet of multicomponent polymeric fiber comprising the steps of:
(i) melt spinning at between 3500 to 5000 m/min in the presence of an attenuating force provided by a rectangular slot jet a fiber having an average fiber diameter greater than 7 microns, said fiber further comprising an amorphous sheath component of from 10 to 70 weight percent of a first polymer based on the total weight of polymer in the core and sheath and a core component of from 30 to 90 weight percent of a fibrous second polymer based on the total weight of polymer in the core and sheath, wherein the melting point of the first polymer is at least 15 degrees C higher than the melting point of the second polymer,
(ii) forming a non-woven web of fibers on a forming belt,
(iii) passing the non-woven web of fibers through heated bonding rolls to fuse the fibers and thereafter,
(iv) smooth calendering said fused fiber web to convert the amorphous sheath of first polymer material into a substantially crystalline continuous phase and further compact and densify the non-woven web to embed the fibrous second polymer into the continuous phase of the first polymer.

12. The method of claim 11, wherein the first polymer is selected from the group consisting of polyarylene sulfide, polyimide, liquid crystalline polyester, fluoropolymer and mixtures thereof.

13. The method of claim 12, wherein the polyarylene sulfide is polyphenylene sulfide.

14. The method of claim 11, wherein the second polymer is selected from the group consisting of polyolefin, polyester, polyamide and mixtures thereof.

15. The non-woven sheet of claim 14, wherein the polyester is polyethylene terephthalate.

## Patentansprüche

1. Vliesstoff umfassend:
ein Netzwerk von im Wesentlichen kontinuierlichen thermoplastischen Polymerfilamenten, wobei die Polymerfilamente jeweils einzeln eine Mehrzahl von Polymeren umfassen, die mindestens ein erstes und ein zweites Polymer umfassen, wobei der Schmelzpunkt des ersten Polymers mindestens 15 Grad C höher liegt als der Schmelzpunkt des zweiten Polymers, wobei die einzelnen Polymerfilamente des Weiteren **dadurch gekennzeichnet sind, dass**
(1) das erste Polymer 10 bis 70 Gewichtsprozent, auf das Gesamtgewicht des ersten und zweiten Polymers bezogen, umfasst,
(2) das zweite Polymer 30 bis 90 Gewichtsprozent, auf das Gesamtgewicht des ersten und zweiten Polymers bezogen, umfasst und
das Netzwerk von Filamenten derart konsolidiert und verschmolzen ist, dass
(a) das erste Polymer eine kontinuierliche Phase in dem verschmolzenen, konsolidierten Netzwerk bildet und
(b) das zweite Polymer eine disperse Phase in dem verschmolzenen, konsolidierten Netzwerk bildet.

2. Vliesstoff nach Anspruch 1, wobei das erste Polymer aus der Gruppe ausgewählt ist bestehend aus Polyarylensulfid, Polyimid, flüssigem kristallinem Polyester, Fluorpolymer und Mischungen davon.

3. Vliesstoff nach Anspruch 2, wobei das Polyarylensulfid Polyphenylensulfid ist.

4. Vliesstoff nach Anspruch 1, wobei das zweite Polymer aus der Gruppe ausgewählt ist bestehend aus Polyolefin, Polyester, Polyamid und Mischungen davon.

5. Vliesstoff nach Anspruch 2, wobei der Polyester Polyethylenterephthalat ist.

6. Elektrische Isolierkomponente für eine elektrische Vorrichtung umfassend den Vliesstoff nach Anspruch 1.

7. Isolierung, die für eine elektrische Vorrichtung nützlich ist, umfassend einen oder mehrere Vliesstoff(e) nach einem der Ansprüche 1 bis 5, der/die an mindestens eine Seite einer polymeren Folie anliegt/anliegen und daran befestigt ist/sind.

8. Isolierung nach Anspruch 7, wobei die polymere Folie eine Polyesterfolie ist.

9. Isolierung nach Anspruch 7, die die Form eines Deckschiebers, eines Verschlusses, eines Keils oder eines Stabs aufweist.

10. Elektrische Vorrichtung, die die Isolierung nach Anspruch 7 umfasst.

11. Verfahren zur Herstellung eines Vliesstoffs aus polymerer Multikomponentenfaser, umfassend die Schritte des:
(i) Schmelzspinnens, mit 3500 bis 5000 m/min in Gegenwart einer abschwächenden Kraft, die von einer rechteckigen Schlitzdüse bereitgestellt wird, einer Faser, die einen durchschnittlichen Faserdurchmesser von mehr als 7 Mikron aufweist, wobei die Faser des Weiteren eine amorphe Ummantelungskomponente von 10 bis 70 Gewichtsprozent eines ersten Polymers, auf das Gesamtgewicht des Polymers in dem Kern und der Ummantelung bezogen, und eine Kernkomponente von 30 bis 90 Gewichtsprozent eines faserigen zweiten Polymers, auf das Gesamtgewicht des Polymers in dem Kern und der Ummantelung bezogen, umfasst, wobei der Schmelzpunkt des ersten Polymers mindestens 15 Grad C höher liegt als der Schmelzpunkt des zweiten Polymers,
(ii) Bildens einer Vliesstoffbahn aus Fasern auf einem Formierband,
(iii) Hindurchführens der Vliesstoffbahn von Fasern durch erhitzte Bondierwalzen, um die Fasern zu verschmelzen und daraufhin
(iv) Glattkalandrierens der verschmolzenen Faserbahn, um die amorphe Ummantelung aus erstem Polymermaterial in eine im Wesentlichen kristalline kontinuierliche Phase umzuwandeln und des Weiteren die Vliesstoffbahn zusammenzupressen und zu verdichten, um das faserige zweite Polymer in die kontinuierliche Phase des ersten Polymers einzubetten.

12. Verfahren nach Anspruch 11, wobei das erste Polymer aus der Gruppe ausgewählt ist bestehend aus Polyarylensulfid, Polyimid, flüssigem kristallinem Polyester, Fluorpolymer und Mischungen davon.

13. Verfahren nach Anspruch 12, wobei das Polyarylensulfid Polyphenylensulfid ist.

14. Verfahren nach Anspruch 11. wobei das zweite Polymer aus der Gruppe ausgewählt ist bestehend aus Polyolefin, Polyester, Polyamid und Mischung davon.

15. Vliesstoff nach Anspruch 14, wobei der Polyester Polyethylenterephthalat ist.

## Revendications

1. Feuille non tissée comprenant:
un réseau de filaments de polymère thermoplastique sensiblement continus, les filaments de polymère comprenant chacun individuellement une pluralité de polymères comprenant au moins un premier polymère et un deuxième polymère, le point de fusion du premier polymère étant d'au moins 15 degrés C plus élevé que le point de fusion du deuxième polymère, les filaments individuels de polymère étant en outre **caractérisés en ce que**:
(1) le premier polymère comprend de 10 à 70 pour cent en poids du poids total du premier et du deuxième polymère,
(2) le deuxième polymère comprend de 30 à 90 pour cent en poids du poids total du premier et du deuxième polymère, et
le réseau de filaments étant consolidé et fusionné de sorte que:
(a) le premier polymère forme une phase continue dans le réseau consolidé fusionné et
(b) le deuxième polymère forme une phase dispersée dans le réseau consolidé fusionné.

2. Feuille non tissée selon la revendication 1, dans laquelle le premier polymère est sélectionné parmi le groupe consistant en sulfure de polyarylène, polyimide, polyester liquide cristallin, fluoropolymère et des mélanges de ceux-ci.

3. Feuille non tissée selon la revendication 2, dans laquelle le sulfure de polyarylène est du sulfure de polyphénylène.

4. Feuille non tissée selon la revendication 1, dans laquelle le deuxième polymère est sélectionné parmi le groupe consistant en polyoléfine, polyester, polyamide et des mélanges de ceux-ci.

5. Feuille non tissée selon la revendication 2, dans laquelle le polyester est du téréphtalate de polyéthylène.

6. Composant d'isolation électrique pour un dispositif électrique, comprenant la feuille non tissée selon la revendication 1.

7. Isolation utile dans un dispositif électrique, comprenant une ou plusieurs feuilles non tissées selon l'une quelconque des revendications 1 à 5 positionnées adjacentes à et attachées à un côté au moins d'un film polymère.

8. Isolation selon la revendication 7, dans laquelle le film polymère est un film de polyester.

9. Isolation selon la revendication 7, ayant la forme d'un caniveau d'encoche, d'une fermeture, d'une cale ou d'une baguette.

10. Dispositif électrique comprenant l'isolation selon la revendication 7.

11. Procédé de production d'une feuille non tissée en fibre polymère à composants multiples, comprenant les étapes consistant à:
(i) filer par fusion à d'entre 3500 et 5000 m/min en présence d'une force d'atténuation fournie par un jet issu d'une fente rectangulaire, une fibre ayant un diamètre moyen de fibre supérieur à 7 microns, ladite fibre comprenant en outre un composant de gaine amorphe faisant de 10 à 70 pour cent en poids d'un premier polymère sur la base du poids total de polymère dans l'âme et dans la gaine, et un composant d'âme faisant de 30 à 90 pour cent en poids d'un deuxième polymère fibreux sur la base du poids total de polymère dans l'âme et dans la gaine, où le point de fusion du premier polymère est d'au moins 15 degrés C plus élevé que le point de fusion du deuxième polymère,
(ii) former une bande non tissée de fibres sur une courroie de formage,
(iii) passer la bande non tissée de fibres à travers des rouleaux de liage chauffés pour fusionner les fibres et ensuite
(iv) traiter par calandrage lisse ladite bande de fibres fusionnées pour convertir la gaine amorphe en la première matière polymère en une phase continue sensiblement cristalline et compacter et densifier en plus la bande non tissée afin d'intégrer le deuxième polymère fibreux dans la phase continue du premier polymère.

12. Procédé selon la revendication 11, dans lequel le premier polymère est sélectionné parmi le groupe consistant en sulfure de polyarylène, polyimide, polyester liquide cristallin, fluoropolymère et des mélanges de ceux-ci.

13. Procédé selon la revendication 12, dans lequel le sulfure de polyarylène est du sulfure de polyphénylène.

14. Procédé selon la revendication 11, dans lequel le deuxième polymère est sélectionné parmi le groupe consistant en polyoléfine, polyester, polyamide et des mélanges de ceux-ci.

15. Feuille non tissée selon la revendication 14, dans laquelle le polyester est du téréphtalate de polyéthylène.
